# EUROPÄISCHE PATENTSCHRIFT

(11) **EP 0 674 944 B1**
(45) Veröffentlichungstag und Bekanntmachung des Hinweises auf die Patenterteilung: **14.04.1999**
(21) Anmeldenummer: 95100671.7
(22) Anmeldetag: 19.01.1995
(51) Int. Cl.: B01J 35/04, B01J 37/02

(54) **Verfahren zur Herstellung eines beschichteten, monolithischen Metallträgers**
Process for the production of a coated monolithic metal support
Procédé de fabrication d'un support métallique monolithique revêtu

(30) Priorität: 31.03.1994 DE 4411302
(43) Veröffentlichungstag der Anmeldung: 04.10.1995
(73) Patentinhaber: Degussa Aktiengesellschaft, 60311 Frankfurt (DE)
(72) Erfinder: Domesle, Rainer, Dr., D-63755 Alzenau-Kälberau (DE); Engler, Bernd, Dr., Ridgefield Park, N.J. 07660 (US); Lox, Egbert, Dr., D-63457 Hanau (DE)

(56) Entgegenhaltungen:
- EP-A- 0 591 689

## Beschreibung

Die Erfindung betrifft ein Verfahren zur Herstellung eines beschichteten, monolithischen Metallträgers, der aus einem zylinderförmigen in axialer Richtung gasdurchlässigen Formkörper besteht, welcher aus einem oder mehreren miteinander metallfügetechnisch verbundenen glatten und/oder gewellten Metallfolienbändern gebildet ist, deren Längsausdehnung quer zur Zylinderachse liegt und die gegebenenfalls Schlitze, Lochungen und/oder Prägungen aufweisen und zur Bildung des Formkörpers gestapelt oder gefaltet und gegebenenfalls verschlungen oder spiralig aufgewickelt werden. Insbesondere betrifft die Erfindung ein Verfahren zur Herstellung eines mit einer Dispersionsbeschichtung beschichteten, monolithischen Metallträgers zur Verwendung als Katalysator bei chemischen Stoffumwandlungen oder als Absorber beziehungsweise Adsorber für gasförmige oder flüssige Komponenten eines Stoffgemisches.

Beschichtete Metallträger werden in großen Stückzahlen bei der Autoabgasreinigung als Katalysatoren oder als regenerierbare Absorber beziehungsweise Adsorber zur Speicherung von Kohlenwasserstoffen und Stickoxiden eingesetzt.

Die aus den Metallfolienbändern gebildeten Formkörper weisen eine Zellstruktur auf, die einen Durchtritt des zu reinigenden Abgases in axialer Richtung erlaubt. Im einfachsten Fall handelt es sich bei der Zellstruktur um achsenparallele Strömungskanäle. Je nach Art der Wellung der Metallfolienbänder können die Strömungskanäle gegenüber der Achsenrichtung geneigt sein und auch Abwinkelungen aufweisen. Schlitze, Lochungen und Prägungen führen zu einem Gasaustausch zwischen den verschiedenen Strömungskanälen sowie zu einer starken Verwirbelung und damit zu einem intensiven Kontakt des Abgases mit der katalytisch aktiven Beschichtung.

Typische Zelldichten von Metallträgerkatalysatoren in der Autoabgaskatalyse liegen zwischen 15 cm⁻² (96 inch⁻²) und 78 cm⁻² (500 inch⁻²). Zur Verbesserung des Reinigungsgrades der Abgase werden Zelldichten bis zu 186 cm⁻² (1200 inch⁻²) angestrebt.

Die DE 29 46 685 C2 beschreibt ein Verfahren zur Herstellung eines Metallträgerkatalysators aus einem in einem Metallmantel angeordneten Verbundkörper. Der Verbundkörper wird aus abwechselnd aufeinander angeordneten glatten und gewellten beziehungsweise gefalteten Blechen aus hochtemperaturfestem Metall hergestellt, wobei die Bleche als Vorform des Verbundkörpers zu einem Paket geschichtet oder spiralig aufgewickelt werden und die Vorform an ihren Stirnflächen verschweißt, der Verbundkörper in den Metallmantel eingesetzt und mit diesem ebenfalls verschweißt wird. Anschließend wird das Innere des Verbundkörpers mit einem katalysefördernden Metalloxid beschichtet.

Die DE 29 24 592 A1 beschreibt ebenfalls ein Verfahren zum Herstellen einer Trägermatrix für einen Metallträgerkatalysator. Die Trägermatrix besteht aus glatten und gewellten Blechen, die lagenweise abwechselnd angeordnet und punktuell oder insgesamt miteinander verlötet sind. Das Lot wird an den entsprechenden Stellen in Form einer Lotpaste, eines Lotpulvers oder eines Lotbandes aufgetragen. Zum Verlöten wird die gesamte Trägermatrix im Vakuum oder unter Schutzgas auf Löttemperatur erwärmt.

Beiden Verfahren ist gemeinsam, daß die katalytisch aktive Dispersionsbeschichtung erst nach dem metallfügetechnischen Verbinden, d. h. erst nach dem Verschweißen beziehungsweise nach dem Verlöten des Formkörpers vorgenommen wird. Dies führt dazu, daß infolge der Oberflächenspannungen die Dispersionsbeschichtung sich an den spitzen Winkeln zwischen zwei sich berührenden Metallbändern ansammelt, und somit die Beschichtungsdicke über den Querschnitt des Formkörpers sehr ungleichmäßig wird. Das in den Winkeln angesammelte Material ist für das zu reinigende Abgas nur schlecht zugänglich, so daß das katalytisch aktive Material nur unbefriedigend genutzt wird. Darüber hinaus führt die Anhäufung des Beschichtungsmaterials auch zu einer Erhöhung des Strömungswiderstandes für das Abgas.

Diese Nachteile sind bei Formkörpern mit vergleichsweise niedrigen Zelldichten bis 32 cm⁻² weniger stark ausgeprägt. Bei höheren Zelldichten führt die nachträgliche Beschichtung jedoch zu einer größer werdenden Gefahr von Zellverengungen und Zellverstopfungen, so daß Formkörper mit Zelldichten oberhalb 93 cm⁻² kaum noch beschichtbar sind.

In der WO 92/14549 wird vorgeschlagen, bei Zelldichten im Bereich zwischen 800 und 1200 inch⁻² (entsprechend 125 bis 186 cm⁻²) die Formkörper aus bereits beschichteten Metallfolienbändern herzustellen und ohne weitere fügetechnische Verbindungen in das umhüllende Mantelrohr einzuschieben. Bei diesen Metallträgerkatalysatoren ist nur aufgrund der verwendeten hohen Zelldichte eine ausreichende Stabilität und Sicherheit gegenüber einem Ausschieben des Formkörpers aus dem Mantelrohr infolge des Abgasdruckes gewährleistet. Auf diese Weise hergestellte Metallträgerkatalysatoren mit geringerer Zelldichten zeigen keine ausreichende Stabilität gegenüber dem pulsierenden Abgasdruck und die dadurch verursachten axialen und radialen Schwingungen im Betrieb.

Gemäß der EP 0 591 689 A1 können monolithische Metallträgerkatalysatoren aus mehreren miteinander verschlungenen Blechstapeln von gewellten und glatten Metallfolienbändern sehr wirtschaftlich und mit ausgezeichneter Schichtdickengleichmäßigkeit der katalytischen Beschichtung hergestellt werden, wenn die für den Katalysator benötigten Blechstapel aus zuvor beschichteten und abgelängten Metallbändern zusammengestellt und zur Formung der Matrix miteinander verschlungen werden, die Matrix sodann in ein Mantelrohr eingesetzt wird und die freien Enden der Metallbänder am Mantelrohr durch Schweißen befestigt werden. Die Stabilisierung und Befestigung der Blechstapel erfolgt also nach diesem Verfahren nur durch Verschweißen der Enden der beschichteten Folienbänder mit dem umhüllenden Mantelrohr.

Aufgabe der vorliegenden Erfindung ist es, ein Verfahren zur Herstellung beschichteter monolithischer Metallträger anzugeben, welches es ermöglicht, unabhängig von der Zelldichte beschichtete Metallträger zu erzeugen, die die hohe Schichtdickengleichmäßigkeit von Metallträgern aufweisen, die aus zuvor beschichteten Metallfolienbändern zusammengestellt werden und gleichzeitig die hohe Festigkeit von Metallträgern besitzen, deren Metallfolienbänder vor dem Beschichten metallfügetechnisch miteinander verbunden werden.

Diese Aufgabe wird durch ein Verfahren zur Herstellung eines monolithischen Metallträgers gelöst, der aus einem zylinderförmigen in axialer Richtung gasdurchlässigen Formkörper besteht, wobei der Formkörper aus einem oder mehreren zuvor mit einer Dispersionsbeschichtung beschichteten glatten und/oder gewellten Metallbändern gebildet wird, deren Längsausdehnung quer zur Zylinderachse liegt und die gegebenenfalls Schlitze, Lochungen und/oder Prägungen aufweisen und zur Bildung des Formkörpers gestapelt oder gefaltet und gegebenenfalls verschlungen oder spiralig aufgewickelt werden.

Das Verfahren ist dadurch gekennzeichnet, daß während oder nach der Bildung des Formkörpers die Metallfolienbänder mit mindestens einem benachbarten Metallfolienband beziehungsweise mit mindestens einer benachbarten Lage desselben Metallfolienbandes metallfügetechnisch verbunden werden.

Zur weiteren Erhöhung der Festigkeit des Metallträgers kann es vorteilhaft sein, den Formkörper in ein Mantelrohr einzusetzen und beide direkt oder unter Verwendung einer elastischen Lagerung aus Metall zum Ausgleich thermischer Dehnungen metallfügetechnisch miteinander zu verbinden.

Zur Verbindung der beschichteten Metallfolienbänder können das Elektronenstrahl- oder das Laserschweißen eingesetzt werden. Beide Verfahren eignen sich zur Verbindung der Metallfolienbänder während der Bildung des Formkörpers. So kann z. B. beim Herstellen eines spiralig aufgewickelten Formkörpers aus einem glatten und einem gewellten Band jede neu hinzukommende Lage eines Metallbandes mit der jeweils darunterliegenden verschweißt werden.

Ebenso ist es möglich, das glatte und das gewellte Band bereits vorab miteinander zu verschweißen und erst danach aufzuwickeln oder zu falten und den gefalteten Stapel gegebenenfalls miteinander gemäß DE 40 16 276 C1 oder WO 89/07488 zu verschlingen. Da bei dieser Vorgehensweise die Metallfolienbänder nicht mit jedem benachbarten Folienband verschweißt sind, ist zumeist ein Einbau des Formkörpers in ein Mantelrohr notwendig.

Die Festigkeit des Formkörpers kann durch ein nachträgliches Verschweißen der Metallfolienbänder an den Stirnflächen des Formkörpers erhöht werden. Diese Maßnahme kann auch als alleinige fügetechnische Verbindung eingesetzt werden.

Die Verbindung der beschichteten Metallfolienbänder untereinander kann mittels beliebiger kontinuierlicher oder unterbrochener Kontaktnähte oder Kontaktpunkte in beliebiger Zahl erfolgen. Die Kontaktlinien sind vorzugsweise ringförmig - auch sprialförmige, sinusförmige oder sägezahnartige Ausführungen sind denkbar, wobei aus Festigkeitsgründen der Primärform der Kontaktlinie eine Sekundärform aufmoduliert sein kann. Auch unterbrochene Kontaktlinien und einzelne Kontaktpunkte mit beliebigem Abstand voneinander sind möglich. Es kann z. B. genügen, bei einem spiralig aufgewickelten Formkörper nur zwei Schweißnähte über die Gesamtlänge des Formkörpers anzubringen.

In einer besonders bevorzugten Ausführungsform des erfindungsgemäßen Verfahrens wird die Dispersionsbeschichtung des oder der Metallfolienbänder mit einem oder mehreren beschichtungsfreien Streifen parallel zur Längsrichtung der Bänder hergestellt, an denen die Bänder mit mindestens einem benachbarten Metallband beziehungsweise mit mindestens einer benachbarten Lage desselben Metallbandes während und/oder nach der Bildung des Formkörpers metallfügetechnisch verbunden werden.

In dieser bevorzugten Ausführungsform des Verfahrens kann neben dem Elektronenstrahl- oder Laserschweißen auch das Widerstandsschweißen z. B. in Form des Rollradschweißens mit Vorteil eingesetzt werden. Alternativ besteht in diesem Fall die Möglichkeit, die metallfügetechnische Verbindung auch durch Löten herzustellen.

Bei der Auswahl eines geeigneten Schweißverfahrens ist darauf zu achten, daß bei Verwendung temperaturempfindlicher Dispersionsbeschichtungen sowohl die zu verbindenden Metallfolienbänder als auch gegebenenfalls der Formkörper und das Mantelrohr während des Schweißvorganges nur an den jeweilig vorgesehenen Kontaktstellen hohen Temperaturen ausgesetzt werden, um die Dispersionsbeschichtung nicht thermisch zu schädigen. Ebenso können bei Verwendung temperaturempfindlicher Dispersionsbeschichtungen nur solche Lötverfahren verwendet werden, bei denen wie beim Schweißen nur die Kontaktstellen erhitzt werden. Zum Beispiel ist möglich, daß ein Lötband zwischen zwei Metallbänder gelegt und durch einen Laser- oder Elektronenstrahl die zum Löten benötigte Wärme örtlich erzeugt wird. Gegebenenfalls ist das Löten oder Schweißen unter Schutzgasatmosphäre vorzunehmen.

Sind die Metallfolienbänder mit temperaturstabilen Dispersionsbeschichtungen versehen, so eignet sich das Löten auch zur Verbindung der Metallfolienbänder erst nach der Bildung des Formkörpers. Hierzu werden während der Bildung des Formkörpers die beschichtungsfreien Streifen mit Lotpaste bestrichen oder es werden an diesen Stellen Lotbänder eingelegt. Danach wird der gesamte Formkörper auf Löttemperatur erwärmt.

Die Verbindung durch Verschweißen und/oder Löten kann an beliebigen Stellen über die Länge des Formkörpers, z. B. bei einem und drei Viertel der Gesamtlänge und/oder auch an den Stirnflächen erfolgen. Die Häufigkeit der fügetechnischen Verbindungen richtet sich nach der benötigten Festigkeit für den beabsichtigten Anwendungsfall. Wenn infolge einer ungenügenden Prozeßkontrolle die Schweißpunkte zu einer Durchlöcherung der Metallfolie führen, ist dies meist unerheblich. Derartige Perforationen können sogar durchaus gewünscht sein, weil dadurch eine Durchmischung von durchströmendem Gas von einem Kanal zum Nachbarkanal senkrecht zur Durchflußrichtung auftritt, was zu einer Verbesserung des Stoffaustausches zwiwchen Gas und Beschichtung führen kann.

Vor dem Verschweißen oder Verlöten der Metallfolienbänder an den Stirnflächen des fertigen Formkörpers ist es für den Fall, daß die Metallfolienbänder in ihren Randbereichen nicht beschichtungsfrei hergestellt wurden, zweckmäßig, zur Herstellung einer dauerhaften Verbindung die Metallfolienbänder an den Stirnflächen vor dem Schweißvorgang mechanisch, z. B. mit einer Bürste abzureinigen oder auf chemischem Wege gänzlich oder teilweise durch Anätzen oder Auflösen von der Beschichtung zu befreien.

Die beschichtungsfreien Streifen auf den Metallfolienbändern können auf einfache Weise durch Verwendung von Blenden beim Aufbringen der Beschichtung oder mittels einer Trennmittelschicht erzeugt werden, die eine Beschichtung verhindern oder ein leichtes Entfernen der Beschichtung vor dem Verschweißen beziehungsweise Löten z. B. durch einfaches Erhitzen und nachfolgendes leichtes Abblasen ermöglichen. Ebenso können vor einer Beschichtung die vorgesehenen beschichtungsfreien Streifen mittels eines geeigneten Klebebandes abgeklebt werden, damit diese z. B. nach Abziehen oder thermischem Wegoxidieren sauber zur Verfügung stehen.

Das Mantelrohr, in welches der Formkörper eingesetzt und mit dem er metallfügetechnisch verbunden wird, kann aus Halbschalen aufgebaut sein und an seinen Enden konische Verjüngungen zum Einbau in den Abgasstrang eines Kraftfahrzeuges aufweisen. Ebenso können zwei oder mehrere Formkörper in ein einziges Mantelrohr eingesetzt und befestigt werden. Dabei können das Mantelrohr beziehungsweise die Halbschalen zur Aufnahme von Formkörpern unterschiedlichen Stirnflächenquerschnittes ausgebildet sein. Ebenso ist es möglich, Formkörper mit unterschiedlichen Zelldichten oder Längen in einem Mantelrohr zu kombinieren.

Zur Verminderung mechanischer Spannungen im Randbereich des Formkörpers infolge von Temperaturwechselbeanspruchungen können Maßnahmen zur elastischen Lagerung des Formkörpers im Mantelrohr vorgesehen sein, beispielsweise ein federndes grobgewelltes Metallfolienband gemäß der DE 38 17 490 A1.

Neben dem metallfügetechnischen Verbinden von Mantelrohr und Formkörper kann der Formkörper auch in ein formschlüssiges Gehäuse eingelegt und durch Sicken oder konische Endstücke gegenüber axialen Verschiebungen gesichert sein. Gegebenenfalls kann bei formschlüssigen Gehäusen der Formkörper zur Abdichtung und thermischen Isolation sowie zur Schwingungsdämpfung mit Fasermatten und/oder Blähmatten ganz oder teilweise umwickelt sein, wobei der Formkörper zusätzlich von ein oder mehreren beschichteten oder unbeschichteten Folienlagen umhüllt sein sollte.

Die Metallfolienbänder können je nach Anwendungsfeld unterschiedliche Zusammensetzung aufweisen. Für die Autoabgasreinigung empfehlen sich hochtemperaturbeständige Stähle mit Chrom, Aluminium und gegebenenfalls Nickel als wesentliche Bestandteile neben Eisen. Für stationäre Abgasreinigungsprozesse und allgemeine chemische Prozesse können weniger temperaturbeständige, dafür aber z. B. gegenüber SO₂ beziehungsweise SO₃ resistentere Stahlzusammensetzungen gewählt werden. Im Falle von Absorptions- und Adsorptionsanwendungen bei niedrigen Temperaturen kann sogar Aluminium als Material für die Metallfolienbänder eingesetzt werden.

Bevorzugte Dicken der Metallfolienbänder liegen zwischen 40 und 150 µm Ein besonderer Vorteil des erfindungsgemäßen Verfahrens ist die Tatsache, daß Formkörper mit sehr geringer als auch sehr hoher Zelldichte herstellbar sind. Bevorzugt ist das Verfahren bei Zelldichten größer als 15 cm⁻² einsetzbar.

Die Zusammensetzung der Dispersionsbeschichtung auf den Metallfolienbändern hängt von der geplanten Verwendung des fertigen Formkörpers ab. Bei Verwendung als Katalysator besteht die Dispersionsbeschichtung aus feinteiligen, meist hochoberflächigen Metalloxiden wie Aluminiumoxid, Siliziumdioxid und Titanoxid sowie Mischungen davon, auf denen die katalytisch aktiven Komponenten, beispielsweise die Edelmetalle der Platingruppe oder Unedelmetalle, und gegebenenfalls Promotoren abgeschieden sind. Die katalytisch aktiven Komponenten und gegebenenfalls Promotoren können schon vor der Beschichtung der zumeist wäßrigen Beschichtungsdispersion in Form von löslichen oder unlöslichen Vorstufen zugefügt werden, die erst beim Calzinieren der Dispersionsbeschichtung in die eigentlichen katalytisch aktiven Komponenten überführt werden. Es ist jedoch auch eine nachträgliche Imprägnierung des fertigen Formkörpers mit weiteren katalytisch aktiven Komponenten und/oder Promotoren möglich. Die nachträgliche Imprägnierung kann vor dem Einbau des beschichteten Formkörpers in ein Mantelrohr oder Gehäuse oder auch danach vorgenommen werden.

Bei Verwendung des beschichteten Formkörpers als Absorber beziehungsweise Adsorber für Schadstoffe im Abgas wird häufig eine feinteilige Beschichtung aus Zeolithen eingesetzt. Auch mehrlagige Beschichtungen aus verschiedenen feinteiligen Stoffen sind möglich.

Die folgenden Beispiele sollen das erfindungsgemäße Verfahren näher erläutern. Es zeigen
- Figur 1a:: Glattes Metallfolienband (1) in Seitenansicht und Draufsicht. Die Beschichtung (2) des Metallfolienbandes weist 2 unbeschichtete parallele Streifen (3) auf.
- Figur 1b:: Gewelltes Metallfolienband (4) in Seitenansicht und Draufsicht. Die Beschichtung (2) des Metallfolienbandes weist 2 unbeschichtete parallele Streifen (3) auf. Die Wellung des Metallfolienbandes ist senkrecht zur Längsrichtung des Bandes ausgerichtet.
- Figur 1c:: Gewelltes Metallfolienband (5) in Seitenansicht und Draufsicht. Die Beschichtung (2) weist 3 unbeschichtete parallele Streifen (3) auf. Die Wellung des Metallfolienbandes bildet mit der Längsrichtung des Bandes einen Winkel kleiner 90°.
- Figur 2:: Bildung eines spiralig aufgewickelten Formkörpers (6) aus einem glatten (1) und einem gewellten Band (4). Jede Windung eines Bandes ist mit beiden benachbarten Windungen verbunden.
- Figur 3:: Bildung eines spiralig aufgewickelten Formkörpers (6) aus einem glatten (1) und einem gewellten Band (4). Die fügetechnische Verbindung wird nur zwischen dem gewellten und glatten Band hergestellt.
- Figur 4:: Bildung eines gefalteten Formkörpers (6)
- Figur 5:: Bildung eines gestapelten Formkörpers (6)

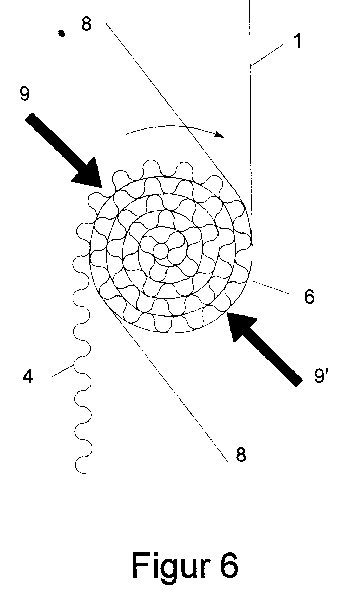

- Figur 6:: Bildung eines spiralig aufgewickelten Formkörpers (6) unter Verwendung von Lotbändern (8).
- Figur 7:: Stirnseitiges Verschweißen eines fertigen Formkörpers (6) mit Hilfe des Widerstandsschweißens.

### Beispiel 1

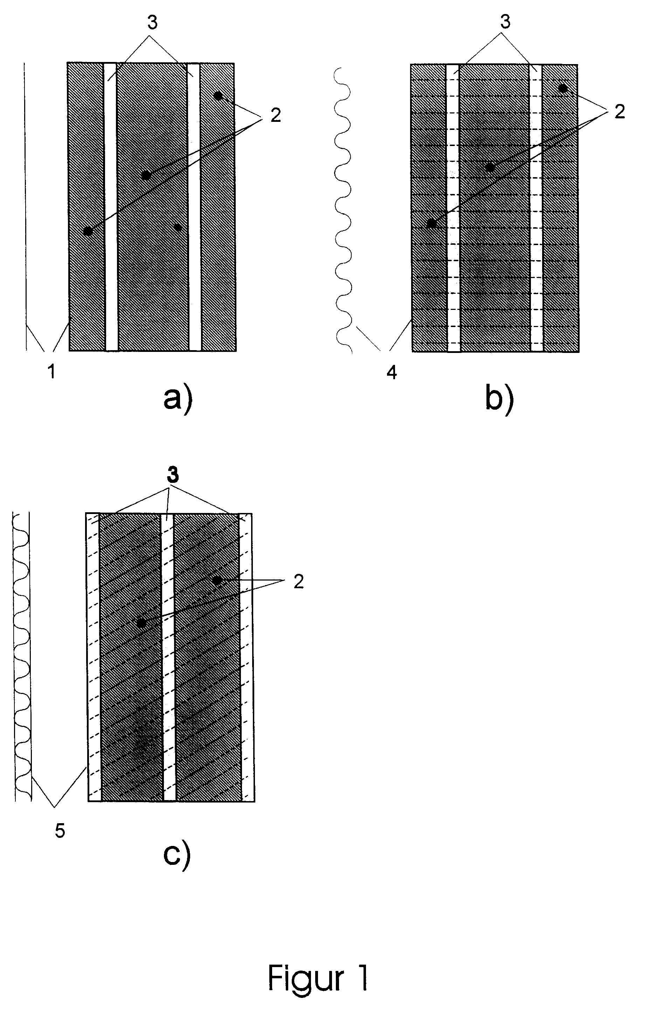

Figur 1 zeigt jeweils in Seitenansicht und Draufsicht drei verschiedene Ausführungsformen von Metallfolienbändern, die beidseitig mit einer Beschichtung (2) versehen sind, die gemäß der bevorzugten Ausführung des Herstellverfahrens beidseitig korrespondierende beschichtungsfreie Streifen (3) aufweist. Die beschichtungsfreien Streifen verlaufen parallel zur Längsrichtung der Metallfolienbänder.

Figur 1a zeigt ein glattes Metallfolienband (1) mit zwei parallelen beschichtungsfreien Streifen (2).

Figur 1b zeigt ein gewelltes Metallfolienband (4), welches mit dem glatten Band von Figur 1a zu einem spiralig aufgewickelten Formkörper verarbeitet werden kann. Die Wellung ist senkrecht zur Längsrichtung des Bandes ausgerichtet.

Figur 1c zeigt ein gewelltes Metallfolienband (5) mit drei parallelen beschichtungsfreien Streifen (2). Die Wellung bildet mit der Längsrichtung des Bandes einen Winkel kleiner 90°. Dieses Band kann ohne Zwischenlage eines glatten Bandes im Zickzack zu einem Formkörper gefaltet werden.

### Beispiel 2

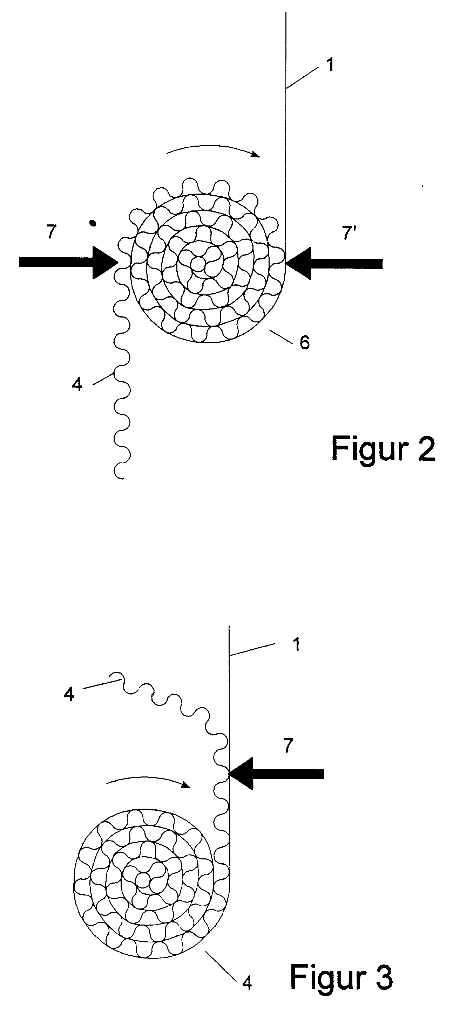

Figur 2 zeigt die erfindungsgemäße Herstellung eines spiralig aufgewickelten Formkörpers (6) aus einem glatten (1) und einem gewellten (4) Metallfolienband. Beide Bänder sind wie in Figur 1a und 1b gezeigt mit einer Dispersionsbeschichtung versehen, die zwei parallele beschichtungsfreie Streifen aufweist.

Die Bänder werden der (in Figur 2 nicht gezeigten) Wickelvorrichtung von gegenüberliegenden Seiten zugeführt und in Drehrichtung des gebogenen Pfeils aufgewickelt. Die Schweißenergie, symbolisiert durch die Pfeile 7 und 7' wird den beschichtungsfreien Streifen jeweils an zwei diametral gegenüberliegenden Punkten des Wickelkörpers (6) zugeführt, so daß jede Windung des Formkörpers mit der jeweils darunterliegenden Windung verschweißt wird.

Es resultiert ein Formkörper, bei dem jede Windung eines Bandes mit den beiden benachbarten Windungen des anderen Bandes verschweißt ist. Der so hergestellte Formkörper ist von sich aus stabil und benötigt kein einhüllendes Mantelrohr. Stattdessen besteht die Möglichkeit, das glatte Band länger auszuführen als das gewellte Band und abschließend einmal oder mehrmals um den Formkörper zu wickeln.

### Beispiel 3

Figur 3 zeigt die erfindungsgemäße Herstellung eines spiralig aufgewickelten Formkörpers (6) aus einem glatten (1) und einem gewellten (4) Metallfolienband. Beide Bänder sind wie in Figur 1a und 1b gezeigt mit einer Dispersionsbeschichtung versehen, die zwei parallele beschichtunsfreie Streifen aufweist.

Die Bänder werden der (in Figur 3 nicht gezeigten) Wickelvorrichtung von der gleichen Seite zugeführt und in Drehrichtung des gebogenen Pfeils aufgewickelt. Das glatte und gewellte Metallfolienband werden an ihren beschichtungsfreien Streifen vor dem Aufwickeln durch Zufuhr von Schweißenergie (7) verschweißt.

Der resultierende Formkörper muß zur endgültigen Fixierung der Spiralform in ein umhüllendes Mantelrohr eingeschoben oder nachträglich an seinen Stirnflächen verschweißt oder verlötet werden.

In den Beispielen 2 und 3 des erfindungsgemäßen Verfahrens kann das glatte Metallfolienband auch durch ein zweites gewelltes Metallfolienband ersetzt werden, welches eine andere Wellung als das erste gewellte Band aufweist.

### Beispiel 4

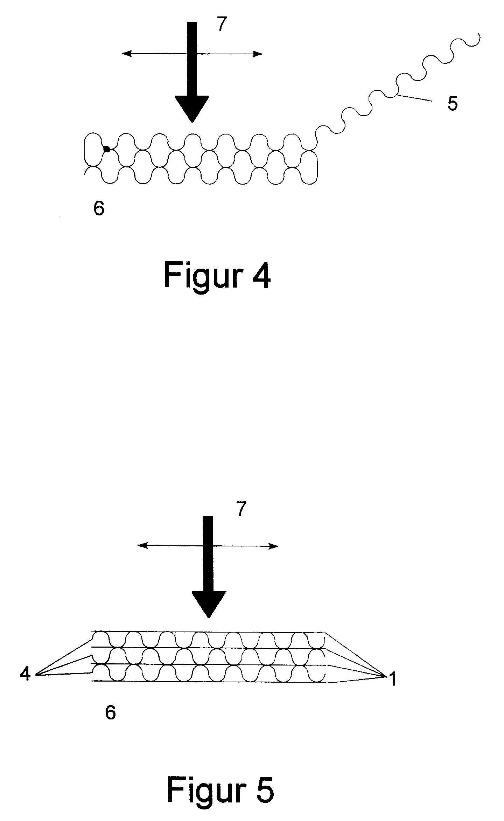

Es wird ein im Zickzack gefalteter Formkörper (6) wie in Figur 4 gezeigt aus einem gewellten Metallfolienband (5) hergestellt.

Um zu verhindern, daß die Wellungen aufeinanderliegender Lagen des Bandes ineinander eingreifen und so die Bildung von Strömungskanälen für das zu behandelnde Gas verhindern, ist die Wellung wie in Figur 1c gezeigt nicht senkrecht zur Längsrichtung des Folienbandes ausgerichtet, sondern ist gegenüber der Senkrechten geneigt.

Jede neue Lage der Zickzackfaltung wird mit der jeweils darunterliegenden Lage des Metallfolienbandes verschweißt. Der Pfeil (7) symbolisiert die Zufuhr der Schweißenergie. Der Ort der Schweißung kann längs des Metallfolienbandes verschoben werden.

Es resultiert ein Formkörper mit rechteckigem Querschnitt, der in sich formstabil ist.

### Beispiel 5

Es wird ein gestapelter Formkörper (6) wie in Figur 5 gezeigt aus abwechselnden Lagen unterschiedlich gewellter Metallfolienbänder (1) und (4) hergestellt. Jede neue Lage eines Metallfolienbandes wird mit der jeweils darunterliegenden verschweißt.

Es resultiert ein formstabiler Formkörper mit rechteckigem Querschnitt.

### Beispiel 6

Es wird ein spiralig aufgewickelter Formkörper (6) analog zu Beispiel 2 hergestellt. Während des Aufwickelns werden an den Stellen der beschichtungsfreien Streifen Lotbänder (8) in den Formkörper mit eingewickelt und gleichzeitig durch Wärmezufuhr mittels Laserstrahlung (9) und (9') verlötet.

### Beispiel 7

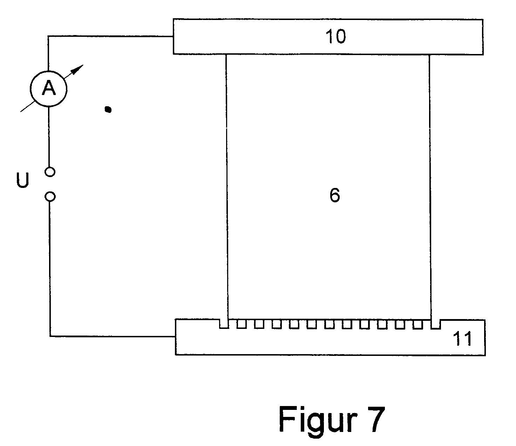

Die nach den Beispielen 2 bis 6 hergestellten Formkörper (6) werden nachträglich wie in Figur 7 gezeigt mittels elektrischem Widerstandsschweißen an den Stirnflächen weiter verstärkt. Hierzu wird der Formkörper wie in der DE 29 46 685 C2 beschrieben mit seinen Stirnflächen zwischen den Elektroden (10) und (11) eines elektrischen Widerstandsschweißgerätes eingespannt. Die untere Elektrode (11) ist mit Rillen versehen. Zum Verschweißen der unteren Stirnfläche des Formkörpers wird durch ihn für 2 bis 3 Sekunden ein Strom von 200 - 300 Ampere, je nach Querschnittsgröße des Formkörpers, geleitet. Dieser Vorgang wird unter Drehen des Formkörpers um seine Zylinderachse mehrmals wiederholt. Die zweite Stirnfläche des Formkörpers wird nach dem Wenden des Körpers analog verschweißt.

Das erfindungsgemäße Herstellverfahren beschränkt sich keinesfalls auf die in den vorstehenden Beispielen erläuterten Ausführungsformen. Dem Fachmann dürfte klar sein, daß die in den Beispielen 1 bis 7 vorgestellten Maßnahmen auch in beliebiger Weise kombiniert werden können.

## Patentansprüche

1. Verfahren zur Herstellung eines monolithischen Metallträgers aus einem zylinderförmigen in axialer Richtung gasdurchlässigen Formkörper, wobei der Formkörper aus einem oder mehreren zuvor mit einer Dispersionsbeschichtung beschichteten glatten und/oder gewellten Metallfolienbändern gebildet wird, deren Längsausdehnung quer zur Zylinderachse liegt und die gegebenenfalls Schlitze, Lochungen und/oder Prägungen aufweisen und zur Bildung des Formkörpers gestapelt oder gefaltet und gegebenenfalls verschlungen oder spiralig aufgewickelt werden,
**dadurch gekennzeichnet,**
daß während und/oder nach der Bildung des Formkörpers die mit einer Dispersionsbeschichtung beschichteten Metallfolienbänder mit mindestens einem benachbarten Metallfolienband beziehungsweise mit mindestens einer benachbarten Lage desselben Metallfolienbandes metallfügetechnisch verbunden werden.

2. Verfahren nach Anspruch 1,
**dadurch gekennzeichnet,**
daß der Formkörper in ein Mantelrohr eingesetzt und mit diesem direkt oder unter Verwendung einer elastischen Lagerung aus Metall zum Ausgleich thermischer Dehnungen metallfügetechnisch verbunden wird.

3. Verfahren nach den Ansprüchen 1 oder 2,
**dadurch gekennzeichnet,**
daß die metallfügetechnischen Verbindungen durch Elektronenstrahl- oder Laserschweißen hergestellt werden.

4. Verfahren nach Anspruch 1,
**dadurch gekennzeichnet,**
daß die Dispersionsbeschichtung des oder der Metallfolienbänder mit einem oder mehreren beschichtungsfreien Streifen parallel zur Längsrichtung der Bänder hergestellt werden, an denen die Bänder mit mindestens einem benachbarten Metallfolienband beziehungsweise mit mindestens einer benachbarten Lage desselben Metallfolienbandes während und/oder nach der Bildung des Formkörpers metallfügetechnisch verbunden werden.

5. Verfahren nach Anspruch 4,
**dadurch gekennzeichnet,**
daß die metallfügetechnischen Verbindungen durch Elektronenstrahl-, Laser- oder Widerstandschweißen hergestellt werden.

6. Verfahren nach Anspruch 4,
**dadurch gekennzeichnet,**
daß die metallfügetechnischen Verbindungen durch Löten hergestellt werden.

7. Verfahren nach einem der Ansprüche 5 oder 6,
**dadurch gekennzeichnet,**
daß der Formkörper in ein Mantelrohr eingesetzt und mit diesem direkt oder unter Verwendung einer elastischen Lagerung aus Metall zum Ausgleich thermischer Dehnungen metallfügetechnisch verbunden wird.

8. Verfahren nach einem der vorstehenden Ansprüche,
**dadurch gekennzeichnet,**
daß nach dem Herstellen des Formkörpers oder Befestigen des Formkörpers im Mantelrohr weitere katalytisch aktive Komponenten und/oder Promotoren durch Imprägnierung aufgebracht werden.

9. Verwendung des nach einem der Verfahren gemäß den Ansprüchen 1 bis 8 hergestellten Metallträgerkatalysators für Stoffumwandlungen insbesondere zur Abgasreinigung von stationären und instationären Verbrennungskraftmaschinen.

## Claims

1. Process for the production of a monolithic metal support from a cylindrical shaped body which is gas-permeable in the axial direction, the shaped body being formed from one or more smooth and/or corrugated bands of metal foil which have been previously coated with a dispersion coating, which have a longitudinal dimension which is transverse to the axis of the cylinder and which optionally have slots, perforations and/or embossing and, in order to form the shaped body, are stacked or folded and optionally entwined or wound up spirally,
characterised in that
during and/or after the formation of the shaped body, the bands of metal foil coated with a dispersion coating are joined, by means of metal joining technology, to at least one adjacent band of metal foil or to at least one adjacent position on the same band of metal foil.

2. Process according to claim 1,
characterised in that
the shaped body is set in a jacketed pipe and by means of metal joining technology is joined to this directly or using an elastic bedding made of metal, in order to compensate for thermal expansions.

3. Process according to claims 1 or 2,
characterised in that
the joints made by metal joining technology are produced by electron-beam welding or by laser welding.

4. Process according to claim 1,
characterised in that
the dispersion coating of the band or bands of metal foil is produced with one or more coating-free stripes parallel to the lengthwise direction of the bands, to which stripes the bands are joined by means of metal joining technology, during and/or after the formation of the shaped body, to at least one adjacent band of metal foil or to at least one adjacent position on the same band of metal foil.

5. Process according to claim 4,
characterised in that
the joints made by metal joining technology are produced by electron-beam welding, by laser welding or by resistance welding.

6. Process according to claim 4,
characterised in that
the joints made by metal joining technology are produced by soldering.

7. Process according to one of claims 5 or 6,
characterised in that
the shaped body is set in a jacketed pipe and by means of metal joining technology is joined to this directly or using an elastic bedding made of metal, in order to compensate for thermal expansions.

8. Process according to any of the preceding claims,
characterised in that
after the production of the shaped body or mounting of the shaped body in the jacketed pipe, other catalytically active components and/or promoters are applied by impregnation.

9. Use of the metal supported catalyst produced by one of the processes according to claims 1 to 8 for conversions of materials, in particular for the purification of waste gas from stationary and nonstationary combustion engines.

## Revendications

1. Procédé de fabrication servant à fabriquer un support monolithique en métal à partir d'un corps de forme ayant une forme cylindrique, perméable aux gaz dans le sens axial, le corps de forme étant formé à partir d'une ou plusieurs bandes de feuilles de métal, enduites auparavant d'une enduction de dispersion, lisses et/ou ondulées, dont l'extension dans le sens de la longueur est perpendiculaire à l'axe cylindrique et qui présentent le cas échéant des fentes, des trous et/ou des empreintes et sont pour constituer le corps de forme empilées ou pliées et le cas échéant enlacées ou enroulées en spiral,
caractérisé en ce que
pendant et/ou après la constitution du corps de forme les bandes de feuilles de métal, enduites d'une enduction de dispersion sont réunies à au moins une bande de feuilles de métal voisine ou à au moins une couche voisine de cette bande de feuilles de métal selon la technique de jonction métallique.

2. Procédé selon la revendication 1,
caractérisé en ce que
le corps de forme est inséré dans un tube enveloppe et relié directement à celui-ci ou en utilisant une couche élastique en métal pour compenser les dilatations thermiques selon la technique de jonction métallique.

3. Procédé selon la revendication 1 ou 2,
caractérisé en ce que
les liaisons selon la technique de jonction métallique sont réalisées par soudage par faisceaux d'électrons ou rayons laser

4. Procédé selon la revendication 1,
caractérisé en ce que
l'enduction de dispersion de la bande de feuilles de métal ou des bandes de feuilles de métal est réalisée avec un ou plusieurs rubans exempts d'enduction, qui sont parallèles au sens de la longueur des bandes, rubans sur lesquels les bandes sont reliées à au moins une bande de feuilles de métal voisine ou à au moins une couche voisine de cette même bande de feuilles de métal pendant et/ou la constitution du corps de forme selon la technique de jonction métallique.

5. Procédé selon la revendication 4,
caractérisé en ce que.
les liaisons selon la technique de jonction métallique sont réalisées par soudage par faisceau d'électrons, par rayons laser ou par une résistance électrique.

6. Procédé selon la revendication 4,
caractérisé en ce que
les liaisons selon la technique de jonction métallique sont réalisées par brasage.

7. Procédé selon l'une des revendications 5 ou 6,
caractérisé en ce que
le corps de forme est inséré dans un tube enveloppe et est relié directement à celui-ci ou en utilisant une couche élastique en métal pour compenser les dilatations thermiques selon la technique de jonction métallique.

8. Procédé selon l'une des revendications précédentes,
caractérisé en ce que
après la fabrication du corps de forme ou la fixation du corps de forme dans le tube enveloppe on dépose d'autres composants et/ou promoteurs catalytiquement actifs par imprégnation.

9. Utilisation du catalyseur à support en métal, fabriqué selon l'un des procédés correspondants aux revendications 1 à 8, pour convertir des matières en particulier pour l'épuration de gaz d'échappement de moteurs à combustion interne fixes et mobiles.
